# EUROPEAN PATENT APPLICATION

(11) **EP 4 483 989 A1**
(43) Date of publication of application: **01.01.2025**
(21) Application number: 23020310.1
(22) Date of filing: 26.06.2023
(51) Int. Cl.: B01D 53/047, B01D 53/22

(54) **METHOD FOR ENRICHMENT OF A GAS COMPONENT AND A PROCESS PLANT FOR ENRICHTMENT OF A GAS COMPONENT**

(71) Applicant: Linde GmbH, 82049 Pullach (DE)
(72) Inventor: Spöri, Ralph, 82049 Pullach (DE); Nohlen, Thomas, 82049 Pullach (DE); Golubev, Dimitri, 82049 Pullach (DE)
(74) Representative: Lu, Jing

(57) **Abstract**

The invention relates to a method and a process plant for enrichment of a component, which uses a first membrane stage (1) and a pressure swing adsorption stage (2), wherein the first membrane stage (1) is fed with a first feed mixture (F1) containing the component and the pressure swing adsorption stage (2) is fed with a second feed mixture (F2) containing the component. In the first membrane stage (1) a first permeate (P1) and a first retentate (R1) are formed and in the pressure swing adsorption stage (3) a product (PR) and a recycling product (RE) are formed. The second feed mixture (F2) is formed at least partially from the first permeate (P1). The first permeate (P1) is continuously analysed by a detector (4) to determine the concentration of the component in the first permeate (P1) and, if the concentration of the component in the first permeate (P1) is below a first predetermined threshold value, a first control valve (CV1) is opened so that part of the first permeate (P1) is routed upstream of the first membrane stage (1) and the first feed mixture (F1) is formed at least partially by the first permeate (P1), and, if the concentration of the component in the first permeate (P1) is above a second predetermined threshold value, a second control valve (CV2) is opened to deplete part of the second permeate.

## Description

The invention relates to a method for enrichment of a component and a process plant for enrichment of a component.

### Background

For production of high purity helium from gas sources with low helium content, i.e. below 5 vol%, a combination of membrane separation (MEM) and pressure swing adsorption (PSA) can be used. One or multiple membrane stages are used to enrich the helium to a sufficient high concentration (approx. 20 vol% to 80 vol%) which is required for final purification in a pressure swing adsorption unit.

The optimum operation of such hybrid plants is strongly dependent on the feed conditions (flow rate, pressure, temperature, and composition of the gas source) as well as the stability of the feed conditions over time.

The design parameters, i.e. the number and size of membrane stages, one or multiple compressors and the PSA and/or other separation and purification steps is usually optimized for a defined range of feed conditions. Within limits, variations of these feed conditions can be handled with a turn-down concept by adjusting temperatures, pressures and/or the active membrane area in the membrane stages or the recovery rate of the PSA.

In case the deviation of one or multiple of the feed conditions is too large, especially if the concentration of the component that should be enriched, for example helium, in the feed or the feed flow rate is decreased, the turn-down capacity of the hybrid membrane-PSA unit might reach its limits and the plant might need to be shut down or go in stand-by mode.

Such a shutdown is usually not economical as the unit cannot operate immediately at full capacity and recovery after the feed conditions come back to their optimum range.

Therefore, there is a need to improve the operation capabilities of the system, especially with regard to the aforementioned limitations.

### Disclosure of the Invention

With this in mind, the present invention proposes a method of enrichment of a component and a corresponding process plant configured for carrying out the method according to the features of the independent claims. Preferred embodiments are the subject of the dependent claims as well as the following description.

Before explaining the advantages of the present invention, some terms used in describing the invention are defined in more detail below.

Component mixtures, as used herein, may be rich or poor in one or more components, where the term "rich" may refer to a content of at least 75%, 80%, 90%, 95%, or 99%, and the term "poor" may refer to a content of at most 25%, 20%, 10%, 5%, or 1%, on a molar, weight, or volume basis. Component mixtures, as used herein, may further be enriched or depleted in one or more components, wherein these terms refer to a corresponding content in another component mixture using which the component mixture under consideration was formed. The component mixture under consideration is "enriched" if it has at least 1.1 times, 1.5 times, 2 times, 5 times, 10 times, 100 times or 1,000 times the content of the designated component(s), and "depleted" if it has at most 0.95 times, 0.75 times, 0.5 times, 0.1 times, 0.01 times or 0.001 times the content of the designated component(s). A component mixture "predominantly" containing one or more components is in particular rich in this or these components in the sense just explained.

Where reference is made herein to "forming" a component mixture using another component mixture, let it be understood that the component mixture under consideration has at least some of the components contained in or formed by the other component mixture. Forming one component mixture from another may include, for example, branching off a portion of the component mixture, feeding one or more additional components or component mixtures, chemically or physically reacting at least some components, and heating, cooling, evaporating, condensing, etc.

The present invention proposes a method for enrichment of a component from a gas source being poor in the component to be enriched, wherein the method includes using a first membrane stage and a pressure swing adsorption (PSA) stage. The first membrane stage is fed with a first feed mixture, while the pressure swing adsorption stage is fed with a second feed mixture. In the first membrane stage a first permeate and a first retentate are formed, while in the pressure swing adsorption stage a product gas and tail gas are formed.

In the proposed method, the first feed mixture is formed at least partially from an input mixture, i.e., the gas source, containing a low concentration of the component, i.e. is poor in the component to be enriched, or by a permeate of another membrane stage arranged upstream of the first membrane stage. The second feed mixture is formed at least partially from the first permeate or a part thereof, which is enriched in the component to be enriched compared to the first feed mixture.

The component can, for example, be a noble gas, in particular helium, or hydrogen, and the focus placed on helium herein is not intended to be limiting, as is the case for the occasional use of the term "helium" instead of "component". The first permeate, or a part thereof, is continuously, essentially continuously, or periodically analysed by a detector to determine the concentration of the component in the first permeate and, if the concentration of the component in the first permeate is below a first predetermined threshold value, a first control valve is opened so that part of the first permeate is routed to a position upstream of the first membrane stage and the first feed mixture is additionally formed at least partially by the first permeate or a part thereof. If, however, the concentration of the component in the first permeate is above a second predetermined threshold value, a second control valve is opened to deplete part of the first permeate, i.e., particularly to withdraw the same from the method proposed or the apparatus used therein. Alternatively, or additionally, part of the first feed mixture can also be withdrawn upstream of the first membrane stage to indirectly reduce the concentration of the component in the first permeate.

By recycling a part of the first permeate enriched in the component, which is formed by the first membrane stage upstream of the PSA unit to the first feed mixture of the first membrane stage, the concentration of the component in the section upstream of the first membrane stage and subsequently in the section downstream of the first membrane stage, i.e. the concentration of the component in the second feed mixture, can be increased, whereby a shut-off of a PSA unit can be prevented, as the PSA unit would need to be turned off in case the concentration of the component is outside the optimal operation range of the PSA unit. Further, in a case in which a compressor is to compress the second feed mixture, the isotropic exponent and molecular weight of the second feed mixture can be kept in a range in which the compressor does not need to be turned off. Therefore, less control and/or shut-off valves for the adjustment of the active membrane area (especially in the first membrane stage) are required and the plant and all units operate in their optimum operation range. In particular, the plant does not need to be shut down or put in hold mode if no or less of the component is in the gas source for a defined period, thereby increasing production efficiency of the plant.

Additionally, a single unit can treat different types of gases with a wide range or feed flow and feed concentrations of the component to be enriched. Therefore, the same unit could be used and re-used with different gas sources and thereby reducing the necessity for multiple plants for different concentrations of the component in the gas source or additional preparation steps before feed the gas source to the plant, which simplifies the overall enrichment process.

Additionally, a compressor located between the first membrane stage and the PSA unit can be omitted, which reduces capital costs, maintenance work, number of spare parts and increases the availability of the unit.

Further, the proposed method can be used in different applications for separation of noble gases in air separation units, stand-alone plants or units integrated in natural gas processing or liquid natural gas (LNG) plants, where the noble gases are usually present in very low concentrations and multiple membrane stages with permeate compressors would be required, thereby simplifying the design of such units.

The proposed method can also advantageously be applied in deblending applications where hydrogen is removed from natural gas. In these applications, the hydrogen concentration in the pipeline can vary in a large range. Designing membrane-PSA units for a total range by adjusting the membrane area makes this units very expensive and increases the operating costs. Applying the proposed method, fully automated units for a wide range of feed concentration of hydrogen can be designed, achieving the previously stated effects also in enrichment of hydrogen.

In an embodiment, the first feed mixture is compressed by a first compressor before being fed to the first membrane stage.

By compressing the feed mixture to the membrane stage by a compressor, the enrichment by the membrane stage can be further increased depending on the pressure, thus adding another control variable to the process of enrichment and enabling the enrichment of a component at a wider concentration range in the input mixture, i.e. gas source.

In another embodiment, the first permeate is compressed by a second compressor before being fed to the pressure swing adsorption unit.

By compressing the feed mixture to the PSA unit, adsorption in the PSA unit can be increased, thus increasing the efficiency of the PSA unit. Further, if the pressure of the first permeate is too low to properly operate the PSA unit, the second compressor can be used to increase the pressure of the first permeate to bring it to a pressure level suitable for the PSA unit.

In another embodiment, a second membrane stage is arranged upstream of the first membrane stage, wherein the second membrane stage is fed with a third feed mixture containing the component that is at least partially formed by an input mixture and in the second membrane stage a second permeate and a second retentate are formed. In particular, the third feed mixture is additionally formed at least partially from the first retentate and the portion of the first retentate in the third feed mixture is controlled in particular by a first pressure controller and a third control valve. In particular, the second permeate, or a part thereof, is continuously, essentially continuously, or periodically analysed by a detector to determine the concentration of the component in the second permeate.

The first retentate formed by the first membrane stage can be designed to approximately have the same concentration of the component to be enriched as the gas source, i.e. the input mixture, and thus, by using the first retentate in addition to the input mixture, the feed pressure and flow rate of the first feed mixture can be adjusted by the amount of first retentate added to the input mixture, whereby the flexibility of the method with regard to input mixture flow rate can be increased.

According to another embodiment, the detector is a thermal conductivity detector. The advantage of this detector is that it delivers a continuous measurement.

By using a thermal conductivity detector to detect the concentration of the component to be enriched in the first permeate, the method can be implemented in enrichment process plants in an easy and cost-effective way.

In another embodiment, the first predetermined threshold value is 40 vol%, particularly 30 vol%, for example 25 vol%.

If the concentration of the component, for example in the case of helium, is low, for example below 30 vol%, the PSA unit operates outside its optimal operation range or, if the concentration is below 10 vol%, cannot operate at all and thus, it is advantageous to feed the first permeate back to upstream of the first membrane stage to increase the concentration of the component to be enriched in the first feed mixture and thereby increasing the concentration of the component to be enriched in the first permeate, in particular to a concentration at which the PSA unit can operate in its optimal operation range, thereby increasing the operation efficiency of an enrichment process plant.

In an embodiment, the second predetermined threshold value is 60 vol%, particularly 70 vol%, especially 80 vol%.

In particular in a case where a compressor is arranged between the first membrane stage and the PSA unit, a concentration of a noble gas like helium above the stated threshold values can lead to overheating in the compressor due to a high isentropic coefficient of the gas. Thus, using the threshold values to open a second control valve to release part of the second permeate to depletion or offgas of the plant, the helium concentration in the plant can be reduced and prevent the plant from being shut-down because of the overheating of the compressor. Similar considerations may apply for other components than helium, as well as other process equipment, in particular other compressors. Further, having a concentration that is too high causes increased flow rates in certain sections of the process. In particular, compression or recycling of the first permeate might not be possible any longer as compressors used within the plant cannot operate anymore, as the compressors might not have enough capacity for a gas mixture with high concentration of the component. Another reason is that if the PSA is not exporting any Helium from the plant, the recycle stream will increase and subsequently will all streams in the plant. This could lead to increasing suction pressures of the compressors, which leads to a higher engine load, in particular in all stages of a multiple-stage compressor, if they are not designed with the necessary additional capacity, which will also lead to a shutdown. To prevent the high pressures, the suction pressure is regularly reduced by discharging part of the feed gas to the compressor to limit the pressure to a permissible maximum pressure. In this process, part of the gas is lost, as it is regularly discharged to a vent or flare system.

According to another embodiment, the pressure of the first retentate is measured by a second pressure controller and controlled by a fourth control valve.

By controlling the pressure of the first retentate at the exit of the first membrane stage, the partial pressure difference in the first membrane stage can be controlled and thus, the concentration of the component to be enriched in the first permeate can be controlled and thereby, the efficiency of the enrichment of the component can be increased.

According to an embodiment, the pressure of the product is measured by a third pressure controller and controlled by a fifth control valve.

The proposed process plant for the enrichment of a component from a gas source containing the component to be enriched in a low concentration, i.e. is poor in the component to be enriched, is configured to perform a method according any of the presented embodiments. For further features and advantages of such a plant and embodiments thereof, reference is therefore expressly made to the above explanations concerning the process proposed in accordance with the present invention and the embodiments, since these apply equally thereto.

### Short description of the Figures

Figure 1 shows a process plant configured to perform an embodiment according to the invention; and
Figure 2 shows a process plant configured to perform another embodiment according to the invention.

### Embodiments of the Invention

The embodiments described below are described for the purpose of assisting the reader in understanding the claimed and previously explained features. They are merely representative examples and are not intended to be considered exhaustive and/or limiting with respect to the features of the invention. It is understood that the advantages, embodiments, examples, functions, features, structures and/or other aspects described previously and hereinafter are not to be considered limitations of the scope of the invention as defined in the claims or limitations of equivalents to the claims, and that other embodiments may be used and modifications made without departing from the scope of the claimed invention.

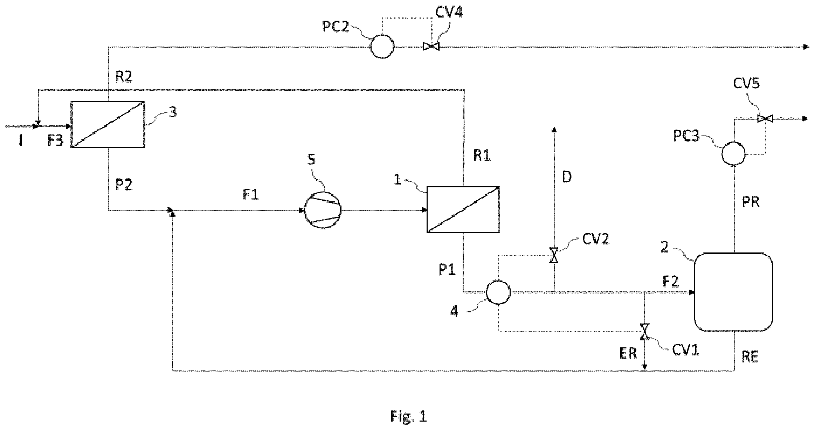

Figure 1 shows a process plant configured to perform an embodiment according to the invention, which is a hybrid membrane-PSA unit with a first membrane stage 1, a second membrane stage 3 and a pressure swing adsorption stage 2. The input mixture I, which is fed to the plant, contains a low concentration (<1 mol.%, i.e. is poor in the component) of a fast-permeating component, for example a noble gas, in particular helium, which should be enriched to form a product that is rich in that component, in a mixture with one or more slow-permeating components, e.g. Nitrogen, which should be depleted to form a product that is poor in that component.

The input mixture I to the plant and the first retentate R1 of the first membrane stage 1 are mixed to form a third feed mixture F3, which is sent to the second membrane stage 3. The major part of the fast-permeating component and a small part of the slow-permeating component permeate through the second membrane stage 3 to form the second permeate P2, which is enriched in the fast-permeating component by a factor between 2 and 20 and depletes the slow-permeating component compared to the third feed mixture F3. The size of the second membrane stage 3 can be designed in a way that the concentration of the fast-permeating component in the second retentate R2 of the second membrane stage 3 is less than approximately 0.1 % to 10 %, preferably 1 % to 5 %, of the fast-permeating component concentration in the input mixture I. The pressure of the second retentate R2 is controlled by a second pressure controller PC2 and a fourth control valve CV4 and can be used to increase the partial pressure difference in the second membrane stage 3 to increase the efficiency of the second membrane stage 3 by increasing the concentration of the fast-permeating component in the second permeate P2.

The second permeate P2 and the recycle product RE from the PSA unit 2 are mixed with each other to form the first feed mixture F1, which is compressed in a first compressor 5 to a pressure higher than the feed pressure of the second membrane stage 3 and sent to the first membrane stage 1. By compressing the first feed mixture F1, the partial pressure difference in the first membrane stage 1 can be increased, whereby the concentration of the fast-permeating component in the first permeate P1 can be increased.

In the first membrane stage 1, the fast-permeating component is again enriched in the first permeate P1 by a factor between including 2 and 20 compared to the first feed mixture F1. The size of the first membrane stage 1 can be designed such that the concentration of the fast-permeating component in the first retentate R1 corresponds approximately to the concentration of the fast-permeating component in the input mixture I. Thereby, the first retentate R1 can be mixed with the input mixture without strongly influencing the concentration of the component in the third feed mixture F3 and can thus be used to control the flow rate of the third feed mixture F3, which can thus be kept at a high level and the second membrane stage 3 can operate in its optimal operation range.

The concentration of the fast-permeating component in the first permeate P1 is analysed continuously, e.g. by a thermal conductivity detector 4. According to the result of the analysis, the first control valve CV1 or the second control valve CV2 is opened to adjust the concentration of the fast-permeating component in the second feed mixture F2 fed to the PSA unit 2.

If the concentration of the fast-permeating component is below a first predetermined threshold, e.g. below 30 vol%, the PSA unit 2 cannot operate at its optimum operation range. In this case, the first control valve CV1 is opened and part of the first permeate P1 is routed upstream of the first membrane stage 1. Thereby, the concentration of the fast-permeating component in the first feed mixture F1 to the first membrane stage 1 is increased. Following, also the concentration in the first permeate P1 is increased and the PSA unit 2 can again be operated in its optimum operation range.

If the concentration of the fast-permeating component is too high, i.e. above the second predetermined threshold, e.g. over 80 vol%, a compressor arranged between the first membrane stage 1 and the PSA unit 2 might overheat due to a higher isentropic coefficient of the gas. In this case, the second control valve CV2 is opened and part of the first permeate P1 is routed to the Depletion/Offgas and the concentration of the component in the plant is reduced. The second control valve CV2 can alternatively also be placed before the first membrane stage 1 to discharge part of the first feed mixture F1 such that less of the first feed mixture F1 is processed by the first membrane stage 1, which reduces the concentration of the fast-permeating component in the first permeate P1.

If the concentration of the fast-permeating component is within the optimal operation range, i.e. above the first predetermined threshold and below the second predetermined threshold, the first permeate P1 is fed to the PSA unit 2 as the second feed mixture F2. In the PSA unit 3, the second feed mixture F2 is further enriched compared to the first permeate P1 and a product PR having a high concentration of the fast-permeating component, i.e. being rich in the fast-permeating component, is released, while the recycle product RE containing a low concentration of the fast-permeating component is fed to upstream of the first membrane stage 1 and forms, together with the second permeate P2 the first feed mixture F1. The pressure of the product PR at the exit of the PSA unit 2 is controlled using a third pressure controller PC3 and a fifth control valve CV5.

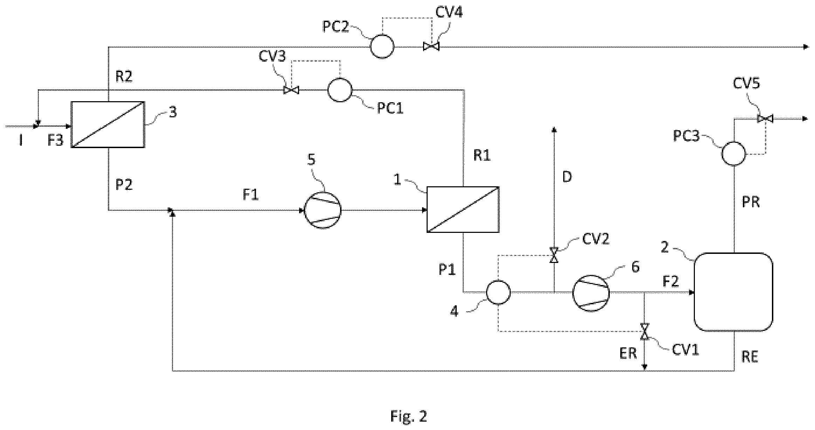

Figure 2 shows a process plant configured to perform another embodiment according to the invention. Identical reference signs refer to identical components and thus, for further details, reference is made to the above description.

In addition to the components previously laid out with regard to Figure 1, the process plant shown in Figure 2 includes a second compressor 6 located between the first membrane stage 1 and the PSA unit 2. In particular, the second compressor 6 is further arranged after the sensor 4 determining the concentration of the fast-permeating component in the first permeate P1 and before the first control valve CV1, which is configured to guide part of the first permeate P1 to upstream of the first membrane stage 1, if the concentration of the fast-permeating component in the first permeate P1 is above the second predetermined threshold. The second compressor 6 is used to compress the first permeate P1 and form the second feed mixture F2 fed to the PSA unit 2. By compressing the first permeate P1, the pressure of the second permeate P2 formed by the second membrane stage 3 can be lower and thus, the plant can be operated in a wider range of the component in the input gas, in particular at a lower concentration of the component in the input gas.

Further, the embodiment shown in Figure 2 includes a first pressure controller PC1 and a third control valve CV3 at the exit of the first membrane stage 1 with which the pressure of the first retentate R1 can be controlled. By increasing the pressure in the first retentate, the overall yield of the component can be increased, as the - highpressure sides of the first and second membrane stage can be decoupled. Additionally, the size of the first membrane stage 1 can be reduced, leading to a higher selectivity of the first membrane stage and thus to a higher yield of the component.

While both Figures 1 and 2 show a block diagram of a process plant with a second membrane stage 2, the second membrane stage 2 is an optional feature and does not need to be present in the process plant. In case the second membrane stage 2 is not present, the input mixture is directly fed to the first membrane stage 1 and the first feed mixture F1 is formed from the input mixture I and recycle product.

## Claims

1. Method for enrichment of a component in a input gas mixture (I) using at least one membrane stage (1,2) and a pressure swing adsorption stage (3),
wherein a first membrane stage (1) is fed with a first feed mixture (F1) containing the component, and the pressure swing adsorption stage (2) is fed with a second feed mixture (F2) containing the component,
wherein in the first membrane stage (1) a first permeate (P1) and a first retentate (R1) are formed and in the pressure swing adsorption stage (2) a product (PR) and a recycling product (RE) are formed,
wherein the second feed mixture (F2) is formed at least partially from the first permeate (P1) or a part thereof;
wherein the first permeate (P1) is continuously analysed by a detector (4) to determine the concentration of the component in the first permeate (P1),
if the concentration of the component in the first permeate (P1) is below a first predetermined threshold value, a first control valve (CV1) is opened so that part of the first permeate (P1) is guided upstream of the first membrane stage (1) and the first feed mixture (F1) is additionally formed at least partially by the first permeate (P1), and,
if the concentration of the component in the first permeate (P1) is above a second predetermined threshold value, a second control valve (CV2) is opened to deplete part of the second permeate.

2. Method according to claim 1, wherein the component is a noble gas, in particular helium, or hydrogen.

3. Method according to any of claims 1 or 2, wherein the first feed mixture (F1) is compressed by a first compressor (5) before being fed to the first membrane stage (1).

4. Method according to any of the preceding claims, wherein the first permeate (P1) is compressed by a second compressor (6) before being fed to the pressure swing adsorption stage (3).

5. Method according to any of the preceding claims, wherein a second membrane stage (3) is arranged upstream of the first membrane stage,
wherein the second membrane stage (2) is fed with a third feed mixture (F3) containing the component that is at least partially formed by an input mixture (I),
wherein in the second membrane stage (3) a second permeate (P2) and a second retentate (R2) are formed.

6. Method according to the preceding claim, wherein the third feed mixture (F3) is formed at least partially from the first retentate (R1).

7. Method according to claim 6, wherein the portion of the first retentate (R1) in the third feed mixture (F3) is controlled by a first pressure controller (PC1) and a third control valve (CV3).

8. Method according to any of the preceding claims, wherein the detector (4) is a thermal conductivity detector.

9. Method according to any of the preceding claims, wherein the first predetermined threshold value is 40 vol%, in particular 30 vol%, for example 25 vol%.

10. Method according to any of the preceding claims, wherein the second predetermined threshold value is 60 vol%, in particular 70 vol%, for example 80 vol%.

11. Method according to any of the preceding claims, wherein the pressure of the second retentate (R2) is measured by a second pressure controller (PC2) and controlled by a fourth control valve (CV4).

12. Method according to any of the preceding claims, wherein the pressure of the product (PR) is measured by a third pressure controller (PC3) and controlled by a fifth control valve (CV5).

13. Process plant for enrichment of a component comprising a first membrane stage (1) and a pressure swing adsorption stage (3), a detector (4) and configured to perform the method according to any of the preceding claims.
